Europäisches Patentamt

European Patent Office

Office européen des brevets

(11) Publication number: **0 045 495**
**B1**

# EUROPEAN PATENT SPECIFICATION

(45) Date of publication of patent specification: **23.04.86**

(51) Int. Cl.⁴: **G 01 N 21/47**

(21) Application number: **81106013.6**

(22) Date of filing: **30.07.81**

(54) Laser nephelometric system.

(30) Priority: **31.07.80 JP 105674/80**

(43) Date of publication of application:
**10.02.82 Bulletin 82/06**

(45) Publication of the grant of the patent:
**23.04.86 Bulletin 86/17**

(84) Designated Contracting States:
**AT BE CH DE FR GB IT LI NL SE**

(56) References cited:
**US-A-3 967 901**

**JOURNAL OF PHYSICS E: Scientific
Instruments, vol. 13, no. 2, February 1980,
London, GB R.O'DRISCOLL et al. "A digital
correlator with blinker facility" pages 192-200**

(73) Proprietor: **Chugai Seiyaku Kabushiki Kaisha
5-1, 5-chome, Ukima Kita-ku
Tokyo (JP)**

(72) Inventor: **Tsuji, Yasuhiro
2-34-1-203, Namiki Kawaguchi-shi
Saitama-ken (JP)**
Inventor: **Wakabayashi, Kiyoshige
6-34-7, Higashiohmiya Ohmiya-shi
Saitama-ken (JP)**
Inventor: **Watanabe, Mitsuo
486-3, Aihara-cho Machida-shi
Tokyo (JP)**

(74) Representative: **Vossius Vossius Tauchner
Heunemann Rauh
Siebertstrasse 4 P.O. Box 86 07 67
D-8000 München 86 (DE)**

# Description

This invention relates to a method of measuring, by means of a laser nephelometric system, the concentration of various substances or particles in a solution based on scattering of part of the incident laser light. The method makes use of a data processing apparatus for processing such scattered light data.

This invention is capable of providing more accurate and higher reliable quantitative analysis of the concentration of substances by processing the scattered light data through a statistical analysis.

When a laser nephelometer measures the concentration of plasma protein and pharmacon in a tested solution, the dust, air bubbles and other substances (e.g. lipoprotein, denatured protein) inherently present in that solution usually become the main error causing elements. Accordingly, if the effect of these elements on the scattered data should be eliminated, this would result in a more accurate and reliable measurement.

The JP—A—90883/1976 describes an apparatus for measuring the concentration of light reflecting substances in a solution. Out of the sampled data elements, only the element representing the scattered light having the least intensity is accepted while any other data element is rejected. The apparatus uses this minimum data element as a "measured value". Further, JP—A—90883/1976 contemplates a method of reducing the effect of dust particles and air bubbles by differentiating a momentary pulsed output resulting from the scattering caused by those particles and bubbles from the uniform output resulting from the substances which are the object of measurement.

The method as disclosed in the JP—A—120485/1978 stores all observed data elements and changes their order in accordance with the data value indicative of the scattered light intensity at the time of sampling so that the data element having the minimum value is placed in the first position. A predetermined number of data elements including and following the minimum data element are all added together and averaged. The average value is indicated by indicating means in the form of digitial representation or print out.

However, dust particles and air bubbles present in suspension in the small space where the laser beam travels cannot be taken out from that space. Accordingly, the above average with respect to the predetermined number of data elements including and following the minimum data element may still have, to a certain extent, error factors due to those dust particles and air bubbles.

It is therefore the main object of this invention to provide a more accurate and reliable measuring method by means of a laser nephelometric system.

Another object of this invention is to provide the above mentioned nephelometric measuring method which processes a number of scattered light data elements through statistical analysis in accordance with the scattering characteristics of the solution containing the substances to be measured.

These objects are achieved by the method according to claim 1.

In accordance with this invention, a plurality of sampled data elements each indicative of the scattered light intensity as detected at the time of sampling are stored. The data element having the minimum data value is searched out from these data elements. This minimum data element is used as a lower limit for selection or screening of data elements. An upper limit is determined from the value of the minimum data element. The lower and upper limits define a range for acceptance or screening of data elements. That is, only those data elements that have values within the range are accepted or selected while the other elements are rejected. An average value is obtained by averaging the accepted data elements. Using this average value as a reference, a second range is determined, extending from a second lower to a second upper limit, said limits being smaller and greater than the average value, respectively, and the center point of said second range being lower than said average value. The second range is used for second screening of data elements. That is, only those data elements that have values within the second range are selected and averaged to produce a second average value. Based upon the fact that the relative variation in scattered light intensity becomes greater as the light intensity decreases, this invention sets the relative width of the above first range to be a function of the minimum value of scattered light data so that it becomes more extensive as the minimum value decreases. Further, the above second range is preferably set to be a function of the standard deviation of the first selected data elements. Thus, accuracy of measurement is improved.

Fig. 1 is a diagram illustrating the laser nephelometric system in accordance with this invention.

Fig. 2 is a flow chart of data processing performed by the central processing unit in Fig. 1.

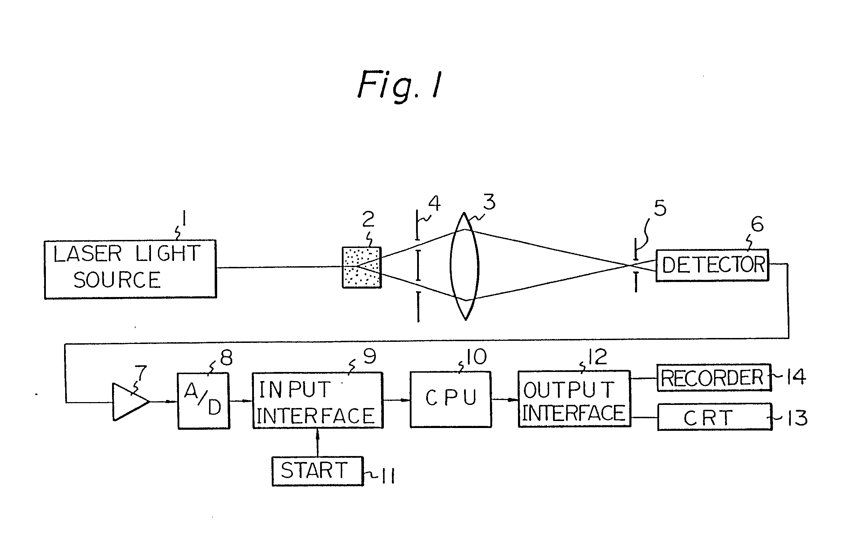

Fig. 1 is a diagram illustrating the laser nephelometric system in accordance with this invention. Reference numeral 1 designates a source of laser light. A sampled cuvette 2 is placed in the axis of the laser light path. A lens assembly 3 concentrates the light that has been scattered in the cuvette 2 and has passed through a slit board 4 for allowing a limited field of vision. Reference numeral 5 designates another slit board which is appropriately place in the path of light from the lens assembly 3. A light detector 6 is placed behind the slit board 5 to detect the scattered light.

Accordingly, when a laser beam is emitted from the source 1, enters into the tested cuvette in which the light is scattered. Part of the scattered light which is within the field of vision limited by the slit board can pass through the slits and is concentrated by the lens 3. Then, the light passes through the slit board 5 and falls upon the light detector 6 in which the light is converted into an electric signal.

Reference numeral 7 is an amplifier which is connected to the output of the light detector 6 to amplify the electric signal to pass it to an analogue-to-digital convertor 8. Reference numeral 9 designates an input interface the output of which is connected to a central processing unit (CPU) for performing the processing of the sampled data in response to a start signal from a starting circuit 11. The data processed in CPU is output through an output interface 12 and may be recorded and displayed by a cathode ray tube 13 and a recording device 14.

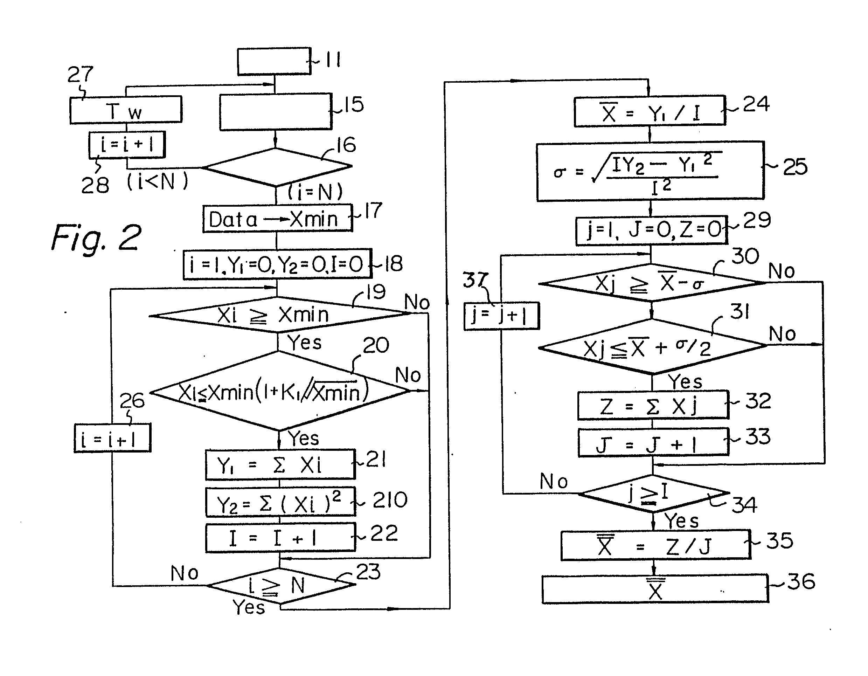

Fig. 2 is a flow chart of data processing performed by the central processing unit. Reference numeral 15 designates a data storing function for receiving a predetermined number N of the sampled data elements Xi ($i=1, 2,...N$). A decision box 16 decides whether the data storing is finished.

If i is less than N, this that the data storage is not completed. An incrementing function 28 increments the number i of the data element to "i+1". After a predetermined delay Tw given by a delay function 27, the next data element is received.

After receiving the predetermined number N of data elements, the computer advances toward a minimum value data element searching function 17. This function detects the minimum data value Xmin among the number N of received data elements each indicative of the scattered light intensity.

Reference numeral 18 designates an initializing function in the data processing which sets the number i of data element, the sum $Y_1$ of the selected data elements, the sum $Y_2$ of the square of the selected data elements, and the number N of selected data elements to "1", "0", "0", and "0", respectively.

Next, out of the number N of the data elements, only those data elements that are within a certain range A from the minimum value Xmin are selected. An example of this certain range A is a range extending from Xmin to Xmin $(1+K_1\sqrt{Xmin})$ (where $K_1$ is constant) which will be described in this embodiment. Reference numeral 19 is a lower limit deciding function for deciding whether the data element Xi is greater than Xmin. Reference numeral 20 is a data upper limit deciding function for deciding whether the data element Xi is smaller than Xmin $(1+K_1\sqrt{Xmin})$.

Reference numeral 21 designates a function for summing up data elements. Reference numeral 210 designates a function for summing up the squared data elements. Reference numeral 22 is a function for counting up the number of the selected data elements.

Accordingly, only when a data element satisfies the conditions given by the data lower limit function 19 and the data upper limit function 20, is that data element added to the sum $Y_1$ in the data element summing function 21 and to the sum $Y_2$ in the squared data element summing function 210 and then the number I of selected data elements in the function 22 is increased by one.

If a data element does not satisfy the above conditions, that data element is rejected without changing the sums $Y_1$ and $Y_2$.

The upper limit for selection or acceptance of data elements is expressed as follows:

$$Xmin(1+K_1/\sqrt{Xmin})=Xmin+K_1\sqrt{Xmin}.$$

This utilizes the fact that the relative variation of the light intensity becomes greater as Xmin decreases. Accordingly, it is advantageous to extend the range of acceptance for smaller Xmin. This is confirmed by dividing the above conditions by Xmin to obtain

$$1\leqq\frac{Xi}{Xmin}\leqq1+\frac{K_1}{\sqrt{Xmin}}$$

This formula teaches that a more extensive range is given as Xmin decreases.

The formula for the upper limit may be generalized as follows:

Upper limit$=$Xmin$[1+f(Xmin)]$ wherein $f(Xmin)$ is a function of the value of minimum data element Xmin which decreases as Xmin increases. The function $f(Xmin)$ determines the relative width of the selection range.

Reference numeral 23 is a function for deciding whether the processing of all data elements is completed. Reference numeral 26 is a function for incrementing, in a similar manner to the data element number incrementing function 28 as previously described, the number of data elements until all data elements are processed.

Accordingly, the arrangement comprising the above initializing function 18, data lower limit deciding function 19, data upper limit deciding function 20, data element summing up function 21, squared data element summing up function 210, selected data number counting up function 22, deciding function 23 for deciding whether the data element selection is completed and data element number incrementing function 26, serves to determine whether each data element Xi is within the range Xmin $\leqq Xi\leqq$ Xmin $(1+M_1/\sqrt{Xmin})$, to reject any element without the range, and to accept any element within the range for adding it to the sum of the data elements and to the sum of the squared data elements and counting up the number of accepted data elements. Reference numeral 24 designates a first average calculating function. When the differentiating of acceptance and rejection of the number N of data elements is completed, the function 24 obtains an average value $\overline{X}$ with respect to the number I of the accepted data elements.

Reference numeral 25 is a standard deviation calculating function. By this function, a standard deviation σ is obtained as a result of the calculation

$$\sqrt{\frac{|Y_2-Y_1^2}{I^2}}.$$

Next, among the number I of the data elements, only those data elements that are within a certain range B including $\overline{X}$ are acepted. An example of the range B is a range extending from $(\overline{X}-\sigma)$ to $(\overline{X}+\sigma/2)$ which will be described in this embodiment.

Data elements are renumbered with respect to the number I of the accepted data elements. The new number is expressed by suffix j. Since the number of the accepted data elements within the range A is I, it follows $1 \leqq j \leqq I$.

Reference numeral 29 is an initializing function which sets data number j to "1" and sets the sum Z of accepted (finally accepted) data elements and the number J of accepted (finally accepted) data elements to "0" (zero).

Reference numeral 30 designates a data lower limit deciding function for deciding whether each data element Xj is greater than $(\overline{X}-\sigma)$.

Reference numeral 31 designates a data upper limit deciding function for deciding whether each data element Xj is smaller than $(\overline{X}+\sigma/2)$.

If a data element Xj satisfies these two conditions, i.e., $Xj \geqq (\overline{X}-\sigma)$ and $Xj \leqq (\overline{X}+\sigma/2)$, that data element Xj is added to the sum Z of the accepted data elements in a data element summing function 32. Also, the number J of the accepted data elements is increased by one by a function 33 which counts up the number of the accepted data elements.

Reference numeral 34 is a function for deciding whether the second processing of the number I of the data elements as selected in the first processing is completed. Reference numeral 37 is a function for incrementing data element number j to j+1 until the second data processing is completed.

Accordingly, the arrangement comprising the initializing function 29, data lower limit deciding function 30, data upper limit deciding function 31, data element summing function 32, the number of accepted data counting up function 33, completion of final data acceptance process deciding function 34 and data element number incrementing function 37 serves to accept, among the number I of data elements $Xj(j=1, 2...I)$, only those data elements that satisfy the requirement $\bar{x}-\sigma \leqq Xj \leqq \bar{x}+\sigma/2$ to sum these data elements and to count up the number J thereof.

Reference numeral 35 designates a second average value calculating function which obtains a second average

$$\bar{\bar{x}}=\frac{Z}{J}$$

from the sum Z of data elements and the number J of accepted data elements. This second average value is used as a measured value of the scattered light intensity and is output from a scattered light intensity measured value outputting function 36.

As noted, the lower limit for the acceptance of the number I of data elements Xj is $\bar{x}-\sigma$, while the upper limit is $\bar{x}+\sigma/2$. This is based upon the fact that the effect of the unnecessary scattered light due to the dust, air bubbles, other particles present in the sample acts to add to the intensity of scattered light that is scattered by the substance to be measured. The above unbalanced setting of lower and upper limits relative to the average $\bar{x}$ effectively suppresses the adverse effect.

The above exemplified second screening (acceptance) range extends from $(\bar{x}-\sigma)$ to $(\bar{x}+\sigma/2)$. This is generalized to extend from $(\bar{x}-a_1\sigma)$ to $(\bar{x}+a_2\sigma)$ wherein $a_1$ is a constant greater than the constant $a_2$.

It is important that the center point of the second screening range be lower than the first average value.

Further, the coefficient of variation cv may be obtained from the average value $\bar{x}$ given by the first average value calculating function 24 and the standard deviation σ given by the standard deviation calculating function 25 in accordance with the formula $cv=\sigma/\bar{x}$. If the measured cv becomes greater than a constant value, alarm means may be activated to indicate that too much unnecessary scattered light exists in the sample.

Instead of using a constant value as a threshold level for coefficient of variation cv, it is possible and advantageous to employ a variable threshold level which is expressed as a function of average value $\bar{x}$ because the coefficient of the variation tends to increase as the light intensity decreases.

For example, it is proposed that the threshold level CVTH defining the critical point for activating the alarm may vary in accordance with a formula

$$CVTH=\frac{K_2}{\sqrt{\bar{x}}}$$

(where $K_2$ is constant). This is of great practical use.

From the foregoing description of the construction and operation of this invention, it is noted that this invention can provide a highly accurate and reliable measured result.

While the specific embodiment has been described and shown, it should be appreciated that various modifications thereof can be made without departing from the scope of the invention as defined by the following claims.

**Claims**

1. A method of measuring the concentration of substances to be measured in a solution by means of a laser nephelometric system, the method comprising the steps of:

(a) applying a beam of laser waves to the solution to obtain the light waves scattered therein by the substances to be measured and by spurious particles,

(b) receiving said scattered light waves and converting into corresponding electric signals in an analogue form,

(c) converting said analogue signals to digital signals,

(d) storing a predetermined number of said digital signals as a group of data elements,

(e) searching a minimum data element out of said group as a first lower limit,

(f) obtaining a first upper limit which is greater than said minimum data element, thus defining a first range, and selecting those data elements only that are within said first range, thus defining a first set of selected data elements and rejecting those data elements which are primarily effected by the spurious particles,

(g) averaging said first set of selected data elements to obtain a first average value, said method being characterised in that

(h) said first upper limit is determined from said first lower limit in such a manner that the ratio of the difference therebetween to the first lower limit decreases as the first lower limit increases so that it accords with the fact that the relative variation in the scattered light intensity decreases as the scattered light intensity increases,

(i) second upper and lower limits are obtained from said first average value and a deviation parameter in said first set of selected data elements, thus defining a second range including said first average value, wherein the center point of said second range is lower than said first average value, and only those data elements are selected that are within said second range, thus defining a second set of selected data elements, and

(j) said second set of selected data elements is averaged to obtain a second average value which is used as a measured value of the intensity of scattered light due to the substances to be measured.

2. The method as claimed in Claim 1 wherein said first upper limit is expressed by Xmin $(1+k/\sqrt{Xmin})$, wherein Xmin is the value of said minimum data element and K is a constant.

3. The method as claimed in claims 1 or 2 wherein said second range extends from $\overline{X}-a_1\sigma$ to $\overline{X}+a_2\sigma$, wherein $\overline{X}$ is said first average value and $\sigma$ is the standard deviation with respect to said first set of selected data elements and $a_1$ is a constant greater than the constant $a_2$.

**Patentansprüche**

1. Verfahren zum Ermitteln der Konzentration von zu messenden Substanzen in einer Lösung mittels eines Lasernephelometrischen Systems mit den folgenden Verfahrensschritten:

(a) Bestrahlen der Lösung mit Laserwellen, um die in der Lösung von den zu messenden Substanzen und von Störteilchen gestreuten Lichtwellen zu erhalten,

(b) Empfangen der gestreuten Lichtwellen und Umwandeln in entsprechende elektrische Signale in analoger Form,

(c) Umwandeln der analogen Signale in digitale Signale,

(d) Speichern einer bestimmten Zahl der digitalen Signale als Gruppe von Datenelementen,

(e) Suchen eines minimalen Datenelements aus der Gruppe als erster unterer Grenzwert,

(f) Erhalten eines ersten oberen Grenzwertes, der größer ist als das minimale Datenelement, wodurch ein erster Bereich definiert wird, und Answählen nur derjenigen Datenelemente, die innerhalb des ersten Bereichs liegen, wodurch ein erster Staz von ausgewählten Datenelementen definiert und diejenigen Datenelemente ausgeschlossen werden, die in erster Linie von den Störteilchen beeinflußt sind,

(g) Mitteln des ersten Satzes von ausgewälten Datenelementen zum Erhalten eines ersten Mittelwertes, dadurch gekennzeichnet,

(h) daß der erste obere Grenzwert aus dem ersten unteren Grenzwert derart bestimmt wird, daß das Verhältnis der Differenz zwischen den beiden Werten zum ersten unteren Grenzwert abnimmt, wenn der erste untere Grenzwert zunimmt, so daß es mit der Tatsache in Einklang steht, daß die relative Variation der gestreuten Lichtintensität abnimmt, wenn die gestreute Lichtintensität zunimmt,

(i) daß zweite obere und untere Grenzwerte aus dem ersten Mittelwert und einem Abweichungsparameter im ersten Satz ausgewählter Datenelemente erhalten werden, wodurch ein den ersten Mittelwert einschließender zweiter Bereich definiert wird, wobei der Mittelpunkt des zweiten Bereichs niedriger ist als erste Mittelwert und nur diejenigen Datenelemente ausgewählt werden, die innerhalb des zweiten Bereichs liegen, wodurch ein zweiter Satz ausgewählter Datenelemente definiert wird, und

(i) daß der zweite Satz ausgewählter Datenelemente gemittelt wird, un einen zweiten Mittelwert zu erhalten, der als Meßwert für die Intensität des an den zu messenden Substanzen gestreuten Lichts verwendet wird.

2. Verfahren nach Anspruch 1, dadurch gekennzeichnet, daß der erste obere Grenzwert durch Xmin $(1+k/\sqrt{Xmin})$ ausgedrückt wird, wobei Xmin der Wert des minimalen Datenelements und K eine Konstante ist.

3. Verfahren nach Anspruch 1 oder 2, dadurch gekennzeichnet, daß sich der zweite Bereich von $\overline{X}-a_1\sigma$ bis $\overline{X}+a_1\sigma$ erstreckt, wobei $\overline{X}$ der erste Mittelwert und $\sigma$ die Standardabweichung bezüglich des ersten Satzes ausgewählter Datenelemente und $a_1$ eine Konstante größer als die Konstante $a_2$ ist.

**Revendications**

1. Procédé de mesure de la concentration de substances à mesurer dans une solution au moyen d'un système néphélométrique à laser, ledit procédé comprenant les étapes suivantes consistant à:

(a) appliquer un faisceau d'ondes laser à la solution pour que les ondes lumineuses y soient diffusées par les substances à mesurer et par des particules parasites,

(b) recevoir lesdites ondes lumineuses diffusées et les convertir en signaux électriques correspondant sous une forme analogique,

(c) convertir lesdits signaux analogiques en signaux numériques,

(d) emmagasiner un nombre prédéterminé desdits signaux numériques en tant que groupe d'éléments de données,

(e) rechercher un élément de donnée minimal parmi ledit groupe en tant que première limite inférieure,

(f) obtenir une première limite supérieure qui soit supérieure audit élément de donnée minimal, définissant ainsi une première plage, et sélectionner uniquement les éléments de données compris dans ladite première plage, définissant ainsi une première série d'éléments de données sélectionnés, et rejeter les éléments de données qui sont principalement affectés par les particules parasites,

(g) calculer la moyenne de ladite première série d'éléments de données sélectionnés pour obtenir une première valeur moyenne, ledit procédé étant caractérisé en ce que,

(h) ladite première limite supérieure est déterminée à partir de ladite première limite inférieure de telle façon que le rapport entre la différence entre les deux et la première limite inférieure diminue à mesure que la première limite inférieure augmente, de façon à concorder avec le fait que la variation relative de l'intensité de la lumière diffusée diminue à mesure que l'intensité de la lumière diffusée augmente,

(i) en ce que les secondes limites supérieure et inférieure sont obtenues à partir de ladite première valeur moyenne et d'un paramètre d'écart dans ladite première série d'éléments de données sélectionnés, définissant ainsi une seconde plage qui inclut ladite première valeur moyenne et dont le point central de la seconde plage est inférieur à ladite première valeur moyenne, et en ce que seuls, les éléments de données inclus dans ladite seconde plage sont sélectionnés, définissant ainsi une seconde série d'éléments de données sélectionnés,

(j) et en ce que la moyenne de ladite seconde série d'éléments de données sélectionnés est calculée pour obtenir une seconde valeur moyenne qui est utilisée en tant que valeur mesurée de l'intensité de la lumière diffusée due aux substances à mesurer.

2. Procédé selon la revendication 1, caractérisé en ce que la dite première limite supérieure est exprimée par $X_{min}(1+k/\sqrt{X_{min}})$, $X_{min}$ étant la valeur dudit élément de donnée minimal et $K$ étant une constante.

3. Procédé selon la revendication 1 ou 2, caractérisé en ce que ladite seconde plage est comprise entre $\overline{X}-a_1\sigma$ et $\overline{X}+a_2\sigma$, $\overline{X}$ étant ladite première valeur moyenne et $\sigma$ étant l'écart standard par rapport à ladite première série d'éléments de données sélectionnées et $a_1$ étant une constante supérieure à la constante $a_2$.

Fig. 1

Fig. 2

11

15

16 (i=N) / (i<N)

17 Data → Xmin

18 i=1, Y₁=0, Y₂=0, I=0

19 Xi ≧ Xmin — No / Yes

20 Xi ≦ Xmin(1+K₁/√Xmin) — No / Yes

21 Y₁ = Σ Xi

210 Y₂ = Σ (Xi)²

22 I = I+1

23 i ≧ N — No / Yes

26 i = i+1

27 Tw

28 i=i+1

$$\overline{X} = Y_1 / I \quad 24$$

$$\sigma = \sqrt{\dfrac{IY_2 - Y_1^{\,2}}{I^2}} \quad 25$$

29 j=1, J=0, Z=0

30 Xj ≧ X̄−σ — No

31 Xj ≦ X̄ + σ/2 — No / Yes

32 Z = Σ Xj

33 J = J+1

34 j ≧ I — No / Yes

$$\overline{\overline{X}} = Z/J \quad 35$$

$$\overline{\overline{X}} \quad 36$$

37 j = j+1